# EUROPÄISCHE PATENTSCHRIFT

(11) **EP 1 900 786 B1**
(45) Veröffentlichungstag und Bekanntmachung des Hinweises auf die Patenterteilung: **10.09.2008**
(21) Anmeldenummer: 07010659.6
(22) Anmeldetag: 30.05.2007
(51) Int. Cl.: C09D 183/04, C08J 7/18

(54) **Kationisch strahlenhärtende Controlled Release Beschichtungsmassen**
Cationic curing controlled release coating compounds
Masses de revêtement à libération contrôlée durcissables par rayonnement cationique

(30) Priorität: 13.06.2006 DE 102006027339
(43) Veröffentlichungstag der Anmeldung: 19.03.2008
(73) Patentinhaber: Evonik Goldschmidt GmbH, 45127 Essen (DE)
(72) Erfinder: Busch, Stefan, 44791 Bochum (DE); Döhler, Hardi, 40221 Düsseldorf (DE); Ferenz, Michael, Dr., 45147 Essen (DE); Herrwerth, Sascha, Dr., 45134 Essen (DE)

(56) Entgegenhaltungen:
- EP-A- 0 355 381
- EP-A- 0 599 615

## Beschreibung

Die vorliegende Erfindung betrifft strahlenhärtende Beschichtungsmassen, bestehend aus mindestens einem mit Vinylalkoxysilan und Vinylcyclohexenoxid modifizierten Siliconharz und mindestens einem Epoxy-funktionalisierten Polysiloxan und einem kationischen Photoinitiator. Des Weiteren können auch Coinitiatoren ein Bestandteil der Mischung sein, um eine erhöhte Reaktivität der Formulierung zu erzielen.

### Stand der Technik:

Abhäsive Beschichtungsmassen werden in großem Umfang zur Beschichtung insbesondere von flächigen Materialien verwendet, um die Adhäsionsneigung von adhärierenden Produkten gegenüber diesen Oberflächen zu verringern. Derart beschichtete flächige Materialien werden häufig als Trennfolien oder Trennpapiere bezeichnet.

Abhäsive Beschichtungsmassen werden beispielsweise zur Beschichtung von Papieren oder Folien verwendet, welche als Träger für selbstklebende Etiketten dienen sollen.

Die mit einem Haftkleber versehenen Etiketten haften auf der beschichteten Oberfläche noch im genügenden Maße, um die Handhabung der die Klebeetiketten aufweisenden Trägerfolien zu ermöglichen. Die verschiedenen Haftkleber erfodern dabei verschieden abhäsiv eingestellte Trennbeschichtungen.

Weitere Verwendungsmöglichkeiten für abhäsive Beschichtungsmassen sind Verpackungspapiere, die insbesondere zur Verpackung von klebrigen Gütern dienen. Derartige Trennbeschichtungen werden beispielsweise zum Verpacken von Lebensmitteln oder zum Verpacken technischer Produkte, wie z.B. Bitumen verwendet. Die verschiedenen klebrigen Güter erfordern dabei verschieden abhäsiv eingestellte Beschichtungen.

Eine weitere Anwendung von abhäsiven Beschichtungsmassen besteht in der Herstellung von Haftverschlüssen, wie z.B. bei so genannten Höschenwindeln oder von Klebebändern. Auch in diesen Anwendungen werden verschieden abhäsiv eingestellte Trennbeschichtungen eingesetzt.

In allen Fällen ist die Stabilität der Abhäsivität über lange Zeiträume wichtig für die Funktion abhäsiver Beschichtungen. Es darf weder zu einer nennenswerten Erhöhung noch Erniedrigung des Trennwertes kommen.

Seit den 80er Jahren sind zwei strahlenhärtende abhäsive Beschichtungsmassen im Markt bekannt.

Ein System härtet nach einem freien radikalischen Mechanismus nach Bestrahlung mit UV- oder Elektronenstrahlen aus.

Solche Systeme sind z.B. in US-4 201 808, US-4 568 566, US-4 4 678 846, US-5 494 979, US-5 510 190, US-5 804 301 und US-5 977 282 beschrieben und z.B. unter den Namen Tego RC 902, Tego RC 711 oder Tego RC 715 kommerziell erhältlich.

Das andere System härtet nach einem kationischen Härtungsmechanismus aus. Diese bestehen aus reaktive Gruppen aufweisenden Organopolysiloxanen, die unter UV-Strahlung aushärten. Diese reaktiven Gruppen können Epoxygruppen, Vinylethergruppen oder Vinyloxygruppen sein. Solche Substanzen sind beispielsweise in US-A-5 057 549, US-A-5 231 157, US-A-4 421 904, US-A-4 547 431, US-A-4 952 657, US-A-5 217 805, US-A-5 279 860, US-A-5 340 898, US-A-5 360 833, US-A-5 650 453, US-A-5 866 261 und US-A-5 973 020 beschrieben. Üblicherweise sind in solchen Systemen die polymerisierbaren Gruppen Epoxygruppen.

Kommerziell sind solche. Produkte z.B. unter den Namen GE UV 9300, GE UV 9400 Tego® RC 1411, Tego® RC 1402 oder Tego® RC 1400 erhältlich.

Die kationische Photopolymerisation ist ein schneller, effizienter und umweltschonender Weg, um kationisch polymerisierbare Monomere zu härten. Besonders effiziente Photoinitiatoren stellen Diaryliodonium (I) und Triarylsulfoniumsalze (II) dar

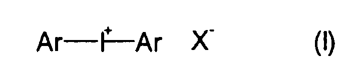

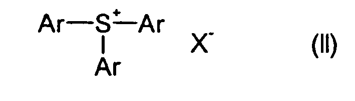

X'=BF₄⁻,PF₆⁻,AsF₆⁻,SbF₆⁻

worin
- Ar: für gleiche oder verschiedene aromatische Reste steht, die gegebenenfalls Heteroatome und/oder weitere substituierende Reste enthalten können.

Insbesondere Diaryliodoniumsalze (I) sind aus der Patentliteratur bekannt (GB-A-1 516 352, US-A-4 279 717, EP-A-0 334 056, US-A-5 468 890) und werden als Photoinitiatoren zur Polymerisation von kationisch polymerisierbaren Substanzen verwendet. Dem Photoinitiator oder der kationisch härtenden Beschichtungsmasse können Coinitiatoren beigegeben werden, die die Aushärtung beschleunigen. Solche Additive können radikalische Photoinitiatoren, reaktive monomere oder UV-Sensitizer sein. UV-Sensitizer sind zum Beispiel bekannt aus der Gruppe der Benzophenone, Thioxanthone und Antracene. Insbesondere in der kationisch härtenden Beschichtungsmasse lösliche Coinitiatoren sind dabei besonders wirksam.

Die gezielte Einstellung von Trennwerten ist eine wichtige Anforderung bei der Verwendung von kationisch strahlenhärtenden Beschichtungsmassen. Es wird unterschieden zwischen Beschichtungen, die einen niedrigen, einen mittleren bzw. einen hohen Trennwert aufweisen. Die Höhe der Trennwerte ist auch von dem verwendeten Substrat sowie den eingesetzten Kleber abhängig, so dass die Zahlenwerte nur charakteristisch für die jeweiligen technischen Bedingungen angegeben werden können. Der Fachmann unterscheidet zwischen easy-, controlled- und tight-Release.

Für verschiedene Applikationen ist ein erhöhter Trennwert (Controlled Release) erwünscht; um z.B. ein frühzeitiges Lösen der Etiketten vom Substrat zu unterbinden. Daher wird von den kommerziell erhältlichen Systemen gefordert, dass ein breites Spektrum an Trennwerten eingestellt werden kann.

In der Literatur werden verschiedene Controlled Release Additive für kationisch strahlenhärtende Trennbeschichtungen beschrieben, die eine gezielte Erhöhung der Trennwerte ermöglichen.

In der US-4 547 431 werden Controlled Release Formulierungen beschrieben, die aus Epoxy-funktionellen linearen Polysiloxanen, kationischen Photoinitiatoren und organischen Polyepoxiden bestehen. Mittels der Menge an organischen Polyepoxiden können die Trennwerte eingestellt werden. Je mehr organische Polyepoxide verwendet werden, desto höhere Trennwerte können erzielt werden.

In der US-4 952 657 werden Controlled Release Formulierungen offenbart, die aus Phenolderivaten und Vinylcyclohexenmonooxid modifizierten linearen Polysiloxanen, Epoxy-modifizierten Polysiloxanen und kationischen Photoinitiatoren bestehen. Die Trennwerte können durch den Anteil an Phenolderivate und Vinylcyclohexenmonooxid modifizierten Polysiloxanketten eingestellt werden. Jedoch sind die erzielten Trennwerte für viele Applikationen nicht ausreichend hoch. Zudem härten diese Systeme nicht ausreichend schnell aus, so dass sie bei technischen Prozessen keine Anwendung finden.

In der US-5 360 833 und US-5 158 991 werden Controlled Release Formulierungen beschrieben, die aus Vinylcyclohexenmonooxid modifizierten linearen Polysiloxanen, kationischen Photoinitiatoren und Vinylcyclohexenmonooxid modifizierten M/Q-Harzen bestehen. Über die Menge des verwendeten Vinylcyclohexenmonooxid modifizierten Siliconharzes können die Trennwerte eingestellt werden. Jedoch haben solche Formulierungen den Nachteil, dass nicht ausreichend hohe Trennwerte erreicht werden können. Zudem ist das Trennverhalten gegenüber vielen Klebstoffen nicht konstant. Es kommt im Verlauf des Trennens vielmehr zu einem raschen Wechsel von hohen und niedrigen Trennkräften was im Mittel zu einem erniedrigten Wert führt. Dieser unerwünschte Vorgang ist dem Fachmann als Zipp bekannt. Des Weiteren treten bei diesen Formulierungen große Schwankungen der Trennwerte von einer Produktion zur nächsten auf, was ihre industrielle Verwendung stark einschränkt.

In der US-5 369 205 werden Controlled Release Additive offenbart, die durch eine Hydrosilylierung von Vinyl-funktionellen M/Q-Siliconharzen mit linearen SiH-Siloxanen und einer anschließenden Umsetzung mit Vinylcyclohexenmonooxid erhalten werden können. Die so erhaltenen Additive werden in Formulierungen mit Vinylcyclohexenmonooxid modifizierten linearen Polysiloxanen und kationischen Photoinitiatoren verwendet. Jedoch haben solche Formulierungen den Nachteil, dass nicht ausreichend hohe Trennwerte erreicht werden können und bei einer Vielzahl von Klebstoffen Zipp auftritt. Des Weiteren treten bei diesen Formulierungen große Schwankungen bei den Trennwerten auf, was ihre industrielle Verwendung stark einschränkt.

In der US-5 866 261 werden Controlled Release Formulierungen beschrieben die aus Vinylcyclohexenmonooxid modifizierten linearen Polysiloxanen, kationischen Photoinitiatoren und SiH-funktionellen M/Q-Harzen bestehen. Über die Menge des verwendeten SiH-funktionellen Siliconharzes können die Trennwerte eingestellt werden. Jedoch haben auch solche Formulierungen den Nachteil, dass nicht ausreichend hohe Trennwerte erreicht werden können und bei einer Vielzahl von Klebstoffen Zipp auftritt. Des Weiteren treten bei diesen Formulierungen große Schwankungen bei den Trennwerten auf, was ihre industrielle Verwendung stark einschränkt.

Ein weiterer Nachteil der Systeme nach dem Stand der Technik besteht darin, dass die ausgehärteten Beschichtungen, bedingt durch einen zu geringen Vernetzungsgrad, noch extrahierbare Bestandteile enthalten.

Aufgabe dieser Erfindung war es eine Controlled Release Formulierung bzw. ein Controlled Release Additiv zu finden, die die Nachteile des Standes der Technik nicht aufweisen.

Diese Aufgabe wird gelöst durch die Verwendung von neuen Siliconharzen, die sowohl mit Vinylalkoxysilanen als auch mit Vinylcyclohexenoxid modifiziert sind.

Gegenstand der Erfindung sind somit kationisch strahlenhärtende Controlled Release Formulierung zur Herstellung von Silicontrennbeschichtungen, bestehend aus:
a) 1 bis 60 Massen-% mindestens eines mit Vinylalkoxysilan und Vinylcyclohexenoxid modifizierten Siliconharzes,
b) 35 bis 98,5 Massen-% mindestens eines Epoxy-funktionalisierten Polysiloxans und
c) 0,5 bis 5 Massen-% mindestens eines kationischen Photoinitiators.

Des Weiteren können auch Coinitiatoren ein Bestandteil der Mischung sein, um eine erhöhte Reaktivität der Formulierung zu erzielen.

Die modifizierten Siliconharze gemäß a) sind herstellbar durch zumindest teilweise Umsetzung von
A) SiH-funktionellen Siliconharzen der allgemeinen Formel (I)

   MₐM'_{b}D_{c}D' _{d}TₑQ_{f} (I)

   worin bedeuten
   M = (R¹)₃SiO_{1/2},
   M'= (R¹)₂HSiO_{1/2},
   D = (R¹)₂SiO_{2/2},
   D'= (R¹)HSiO_{2/2},
   T = (R¹)SiO_{3/2},
   Q = SiO_{4/2},
   R¹ sind gleiche oder verschiedene Reste aus der Gruppe: Alkyl, Aryl, oder Alkaryl mit 1 bis 30 C-Atomen,
   a = 4 bis 200,
   b = 0 bis 20,
   c = 0 bis 100,
   d = 0 bis 20,
   e = 0 bis 150,
   f = 1 bis 200,
   mit der Maßgabe, dass die Summe aus b + d ≥ 1 ist, mit
B) Vinylalkoxysilanen der allgemeinen Formel (II), 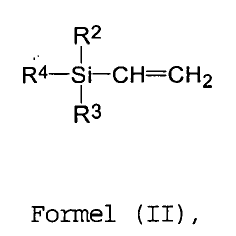 worin
   R², R³, R⁴ gleiche oder verschiedene Alkyl-, Alkoxy-, Aryl-, Aryloxy- oder Alkenyl-Reste mit 1 bis 20 Kohlenstoffatomen, vorzugsweise Methoxy- oder Ethoxygruppen sind, mit der Maßgabe, dass mindestens ein Rest eine Alkoxygruppe ist und
C) Vinylcyclohexenoxid,
   mit der Maßgabe, dass das Molverhältnis n(Vinylalkoxysilan)/n(Vinylcyclohexenoxid > 1 ist.

Gegebenenfalls können bei der Umsetzung der SiH-funktionellen Siliconharze mit den Vinylalkoxysilanen und olefinischen Epoxiden auch andere olefinische Verbindungen mitverwendet werden.

Besonders bevorzugte Vinylalkoxysilane sind Vinyltrialkoxysilane (z.B. Vinyltrimethoxysilan oder Vinyltriethoxysilan).

Bei der Komponente b) handelt es sich um ein Epoxyfunktionalisiertes Polysiloxan, nach dem Stand der Technik. Sie sind seit den achtziger Jahren als strahlenhärtende siloxanhaltige Beschichtungsmassen auf dem Markt bekannt und werden u.a. in den Patentschriften US-4 421 904, US-4 547 431, US-4 952 657, US-5 217 805, US-5 279 860, US-5 340 898, US-5 360 833, US-5 650 453, US-5 866 261, EP-1 101 727 und US-5 973 020 beschrieben. Die in diesen Patentschriften angeführten Epoxy-funktionalisierten Polysiloxane können erfindungsgemäß verwendet werden.

Der Inhalt der oben angeführten Literatur und Patentliteratur zur chemischen Charakterisierung der reaktiven Gruppen enthaltenden, siloxanhaltigen Beschichtungsmassen sowie der mitverwendbaren Initiatoren bzw. Katalysatoren wird daher hiermit als Referenz eingeführt und gilt als Teil des Offenbarungsgehaltes der vorliegenden Anmeldung.

Besonders positive Controlled Release Effekte zeigen die erfindungsgemäßen Formulierungen bei der Mitverwendung von epoxyfunktionellen Polysiloxanen gemäß Anspruch 1, Komponente b), die neben den Epoxygruppen auch partiell Hydroxygruppen trägt, gemäß der allgemeinen Formel (IV) 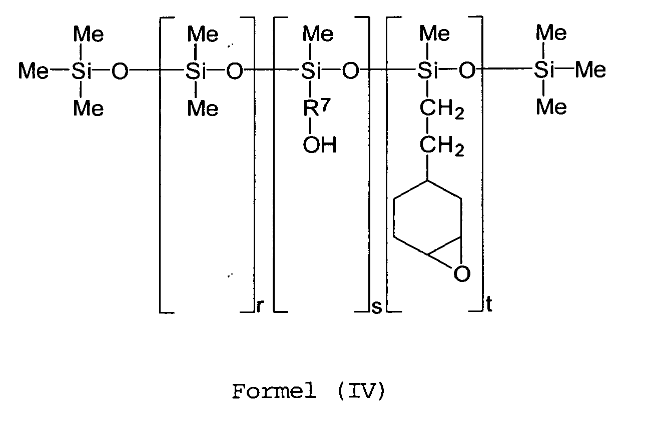 worin
- R⁷: gleiche oder verschiedene Alkenylgruppen mit 2 bis 20 Kohlenstoffatomen, die Ether-, Ester-, Urethan oder Amidgruppen enthalten können,
- r: 5 bis 300, vorzugsweise 5 bis 200,
- s: 0,1 bis 100, vorzugsweise 0,1 bis 10,
- t: 1 bis 100, vorzugsweise 2 bis 40 sind.

Derartige Verbindungen sind z.B. unter dem Namen Tego® RC 1402 kommerziell verfügbar.

Geeignete, besonders effiziente Photoinitiatoren stellen Diaryliodonium (I) und Triarylsulfoniumsalze (II) dar

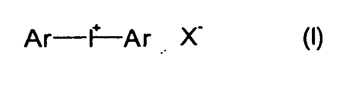

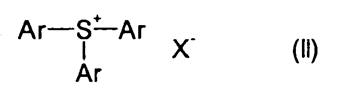

X⁻= BF4⁻, PF₆⁻, AsF₆⁻, SbF₆⁻

worin
- Ar: für gleiche oder verschiedene aromatische Reste steht, die gegebenenfalls Heteroatome und/oder weitere substituierende Reste enthalten können.

Insbesondere Diaryliodoniumsalze (I) sind aus der Patentliteratur bekannt (GB-A-1 516 352, US-A-4 279 717, EP-A-0 334 056, US-A-5 468 890) und werden als Photoinitiatoren zur Polymerisation von kationisch polymerisierbaren Substanzen verwendet.

Dem Photoinitiator oder der kationisch härtenden Beschichtungsmasse können Coinitiatoren beigegeben werden, die die Aushärtung beschleunigen. Solche Additive können radikalische Photoinitiatoren, reaktive monomere oder W-Sensitizer sein. W-Sensitizer sind zum Beispiel bekannt aus der Gruppe der Benzophenone, Thioxanthone und Antracene. Insbesondere in der kationisch härtenden Beschichtungsmasse lösliche Coinitiatoren sind dabei besonders wirksam.

Ferner ist es möglich bei der Verwendung von erfindungsgemäßen Release Additiven die kationisch strahlenhärtenden Epoxy-funktionalisierten Siloxane zusätzlich mit anderen Zusatzstoffen wie z.B. Füllstoffe oder Pigmente zu compoundieren.

### Beispiele:

Nachfolgende Beispiele sollen zur Verdeutlichung der Erfindung dienen, sie stellen keinerlei Einschränkung dar.

Dem Fachmann ist geläufig, dass die angegebenen Formeln idealisierte Strukturformeln darstellen.

### Beispiel 1 (erfindungsgemäß):

Herstellung eines Controlled Release Additivs mit mittelständigen und endständigen Funktionalitäten und anschließendem Umlösen in einem Epoxy-funktionalisierten Siloxan:
1a) Equilibrierung eines SiH-funktionellen Polysiloxans mit M, M', D, D' und Q Gruppen:
   In einem 1.000 mL Dreihalskolben wurden 170 g eines a,w-SiH-Siloxans (M'-D₈-M', SiH-Wert: 0,3 %), 11 g eines mittelständigen SiH-Siloxans (M-D'₄₈-M, SiH-Wert: 1,6 %) und 642 g einer handelsüblichen M/Q Siliconharz-Lösung in Xylol (Festkörpergehalt ca. 61 %, Mw ca. 2.300 g/mol vorgelegt. Unter Rühren wurde ein saurer Katalysator zugegeben und für 12 h gerührt. Anschließend wurden 30 g NaHCO₃ zugeben und weitere 5 h gerührt. Nach einer Filtration wurde ein klares Produkt mit einem SiH-Wert von 0,08 % erhalten.
1b) Hydrosilylierung von Produkt 1a mit Vinyltriethoxysilan und Vinylcyclohexenmonooxid:
   In einem 500 mL Dreihalskolben wurden 258 g Produkt 1a, 34 g Vinyltriethoxysilan, 11 g Vinylcyclohexenmonooxid und 20 ppm eines Pt-haltigen Katalysators vorgelegt, auf 120 °C aufgeheizt, 12 h gerührt und destilliert. Nach einer Filtration wurde ein klares Produkt mit einem Festkörpergehalt von 73 % und einem SiH-Wert von 0 % erhalten.
1c) Umlösen von Produkt 1b in einem Epoxy-funktionalisierten Siloxan:
   80 g von Produkt 1b und 130 g eines a,w-Epoxy-funktionalisierten Siloxans (Umsetzungsprodukt von M'-D₁₈-M' und Vinylcyclohexenmonooxid) werden zusammen in einem 500 ml Kolben vorgelegt und bei 130 °C bei Ölpumpenvakuum destilliert. Nach beendeter Destillation erhält man ein klares Produkt.

### Beispiel 2 (erfindungsgemäß):

Herstellung eines Controlled Release Additivs mit endständigen Funktionalitäten und anschließendem Umlösen in einem Epoxy-funktionalisierten Siloxan:
2a) Equilibrierung eines SiH-funktionellen Polysiloxan mit M, M*'*, D und Q Gruppen:
   In einem 1.000 ml Dreihalskolben wurden 175 g eines a,w-SiH-Siloxan (M'-D₈-M', SiH-Wert: 0,3 %) und 625 g einer handelsüblichen M/Q-Siliconharz-Lösung in Xylol (Festkörpergehalt ca. 64 %, Mw ca. 2.300 g/mol) vorgelegt. Unter Rühren wurde ein saurer Katalysator zugegeben und 12 h gerührt. Anschließend wurden 30 g NaHCO₃ zugegeben und weitere 5 h gerührt. Nach einer Filtration wurde ein klares Produkt mit einem SiH-Wert von 0,08 % erhalten.
2b) Hydrosilylierung von Produkt 2a mit Vinyltriethoxysilan und Vinylcyclohexenmonooxid:
   In einem 500 ml Dreihalskolben wurden 275 g Produkt 2a, 38 g Vinyltriethoxysilan, 5 g Vinylcyclohexenmonooxid und 20 ppm eines Pt-haltigen Katalysators vorgelegt, auf 120 °C aufgeheizt, 12 h gerührt und destilliert. Nach einer Filtration wurde ein klares Produkt mit einem Festkörpergehalt von 70 % und einem SiH-Wert von 0,001 % erhalten.
2c) Umlösen von Produkt 1b in einem Epoxy-funktionalisierten Siloxan:
   80 g von Produkt 2b und 130 g eines a,w-Epoxy-funktionalisierten Siloxans (Umsetzungsprodukt von M'-D₁₈-M' und Vinylcyclohexenmonooxid) werden zusammen in einem 500 ml Kolben vorgelegt und bei 130 °C bei Ölpumpenvakuum destilliert. Nach beendeter Destillation erhält man ein klares Produkt.

### Vergleichsbeispiel 3 (nicht erfindungsgemäß):

GE UV 9430 (von der Firma GE)

### Anwendungstechnische Ausprüfung:

Als erfindungsgemäße abhäsive Beschichtungsmasse wurden die Beispiele 1c und 2c mit dem nicht erfindungsgemäßen Vergleichsbeispiel 3 verglichen.

Dazu wurden diese Beispiele sowohl in der Reinform als auch in Abmischung mit einem kationisch härtenden Silicon für niedrige Trennkraftwerte eingesetzt. Dies sind kommerziell erhältliche Organopolysiloxane welche mit zur kationischen Polymerisation befähigten Epoxygruppen ausgerüstet sind. Das Produkt GE UV 9300 enthält nach 1H-NMR-Analyse neben Epoxygruppen keine Hydroxylgruppen. In dem kommerziell erhältlichem Produkt TEGO RC 1402 sind neben Epoxygruppen auch Hydroxylgruppen nachweisbar. Beide Produkte ergeben, falls in Reinform ausgehärtet eine sehr abhäsive Siliconschicht mit vergleichbaren Trenneigenschaften.

Die Siliconformulierungen enthalten stets 2 Gew.-% eines Diaryliodoniumsalz (TEGO PC 1465 der Firma Goldschmidt). Die getesteten Mischungen dieser Komponenten sind in Tabelle 1 zusammengefasst.

**Tabelle 1:**

| Nr. | Beispiel | Weiteres Silicon | Photoinitiator TEGO PC 1465 |
|---|---|---|---|
| 1 | 1c | Keines | 2 Teile |
| 2 | 2c | Keines | 2 Teile |
| 3 | 3 | Keines | 2 Teile |
| 4 | 1C | GE UV 9300 20 Teile | 2 Teile |
| 5 | 1C | TEGO RC 1402, 20 Teile | 2 Teile |
| 6 | 2C | GE UV 9300, 20 Teile | 2 Teile |
| 7 | 2C | TEGO RC 1402, 20 Teile | 2 Teile |
| 8 | 3 | GE UV 9300, 20 Teile | 2 Teile |
| 9 | 3 | TEGO RC 1402, 20 Teile | 2 Teile |

Die Mischungen 1 bis 9 wurde dann mit einem Fünf-Rollen-Auftragswerk an einer Pilotanlage auf eine BoPP-folie von Innovia Films Typ RN 30 aufgebracht. Das Auftragsgewicht lag bei 1,0 g/m². Die Beschichtung wurde anschließend mit einer Mikrowellen angeregten UV-Lampe (Fusion, 120 W/cm) bei einer Geschwindigkeit von 20 m/min gehärtet.

Der Trennwert der Trennbeschichtungen wurde sofort als auch nach 24 Stunden Lagerzeit bei Raumtemperatur nach der FINAT Testmethode Nr. 10 bestimmt. Dazu wird das handelsübliche Klebeband (25 mm breit) TESA® 7475 der Firma Beiersdorf eingesetzt. Zur Messung der Abhäsivität werden diese Klebebänder auf die Trennbeschichtung aufgewalzt und anschließend bei 40 °C unter einem Gewicht von 70 g/cm² gelagert. Nach 24 h wird die Kraft gemessen, die benötigt wird, um das jeweilige Klebeband mit einer Geschwindigkeit von 30 cm/min unter einem Schälwinkel von 180 ° vom Untergrund abzuziehen. Diese Kraft wird als Trennkraft oder Trennwert bezeichnet.

Kommt es im Verlauf des Trennens zu einem raschen Wechsel von hohen und niedrigen Trennkräften führt dies im Mittel zu einem erniedrigten Wert. Dieser unerwünschte Vorgang ist dem Fachmann als Zipp bekannt.

Die Bestimmung der Haftung des Silicons zum Untergrund wurde mittels eines einfachen, in der Industrie üblichen, subjektiven Tests ermittelt. Bei diesem so genannten RubOff-Test wird mit dem Zeigefinger in reproduzierbarer Art auf der Siliconbeschichtung gerieben. Hier wurde der Test durch 10fache kreisförmige Bewegung in einem Radius von etwa 2 cm mit moderatem Druck durchgeführt. Der Test wurde nach 24 Stunden Lagerzeit bei Raumtemperatur durchgeführt. Er gilt als bestanden, wenn keine Siliconbestandteile vom Untergrund abgerieben werden können.

Die Ergebnisse sind in Tabelle 2 zusammengefasst.

**Tabelle 2:**

| Nr. | Zipp | Trennwert TESA 7475 in cN/inch -sofort- | Trennwert TESA 7475 in cN/inch -nach 24h- | RubOff bestanden 24 h |
|---|---|---|---|---|
| 1 | Nein | 790 | 800 | Ja |
| 2 | Nein | 810 | 820 | Ja |
| 3 | Ja | 450 | 750 | Ja |
| 4 | Nein | 45 | 55 | Ja |
| 5 | Nein | 45 | 50 | Ja |
| 6 | Nein | 42 | 56 | Ja |
| 7 | Nein | 49 | 52 | Ja |
| 8 | Nein | 30 | 55 | Nein |
| 9 | Nein | 29 | 51 | Nein |

Aus den Mischungen 1 bis 3 ist ersichtlich, dass nur mit den erfindungsgemäßen Beispielen ein sehr hoher Trennwert ohne Zipp möglich ist. Auch ist der Trennwert des Vergleichbeispiels 3 nicht stabil und der sofort gemessene Wert unterscheidet sich deutlich von dem nach 24 Stunden Lagerung.

Aus den Mischungen 4 bis 9 ist ersichtlich, das gleiche Trennwerte sofort und nach 24 Stunden Lagerung nur mit den erfindungsgemäßen Mischungen 4 bis 7 möglich sind und hier verbessert mit den Mischungen 5 und 7. Auch die Haftung zum Untergrund ist im Vergleichsbeispiel 8 und 9 nicht ausreichend.

Damit ist gezeigt, dass die erfindungsgemäßen Beispiele gegenüber dem nicht erfindungsgemäßen Beispiel 3 vorteilhaft sind, insbesondere, wenn beigemischte abhäsiven Beschichtungsmassen neben Epoxygruppen auch Hydroxylgruppen enthalten.

## Patentansprüche

1. Kationisch strahlenhärtende Controlled Release Formulierung zur Herstellung von Silicontrennbeschichtungen, bestehend aus:
a) 1 bis 60 Massen-% mindestens eines mit Vinylalkoxysilan und Vinylcyclohexenoxid modifizierten Siliconharzes,
b) 35 bis 98,5 Massen-% mindestens eines Epoxy-funktionalisierten Polysiloxans und
c) 0,5 bis 5 Massen-% mindestens eines kationischen Photoinitiators.

2. Kationisch strahlenhärtende Controlled Release Formulierung gemäß Anspruch 1, **dadurch gekennzeichnet, dass** als Komponente b) Epoxy-funktionalisierte Polysiloxane der allgemeinen Formel (IV) 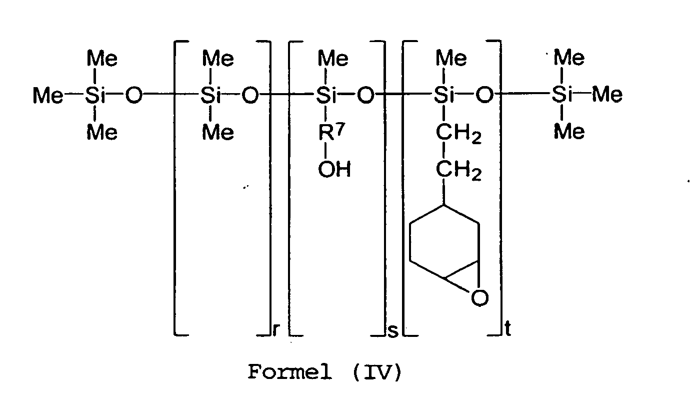 eingesetzt werden, worin
R⁷ gleiche oder verschiedene Alkenylgruppen mit 2 bis 20 Kohlenstoffatomen, die Ether-, Ester-, Urethan oder Amidgruppen enthalten können,
r 5 bis 300,
s 0,1 bis 100,
t 1 bis 100, sind.

3. Kationisch strahlenhärtende Controlled Release Formulierung gemäß den Ansprüche 1 und/oder 2, enthaltend
d) mindestens einen Co-Initiator.

4. Verfahren zur Herstellung von Verbindungen gemäß Anspruch 1, Komponente a), durch Umsetzung nach an sich bekannten Bedingungen von
A) SiH-funktionellen Siliconharzen der allgemeinen Formel (I),
MₐM'_{b}D_{c}D'_{d}TₑQ_{f} (I)
worin bedeuten
M = (R¹)₃SiO_{1/2},
M' = (R¹)₂HSiO_{1/2},
D = (R¹)₂SiO_{2/2},
D' = (R¹)HSiO_{2/2},
T = (R¹)SiO_{3/2},
Q = SiO_{4/2},
R¹ sind gleiche oder verschiedene Reste aus der Gruppe: Alkyl, Aryl, oder Alkaryl mit 1 bis 30 C-Atomen,
a = 4 bis 200,
b = 0 bis 20,
c = 0 bis 100,
d = 0 bis 20,
e = 0 bis 150,
f = 1 bis 200,
mit der Maßgabe, dass die Summe aus b + d ≥ 1 ist, mit
B) Vinylalkoxysilanen der allgemeinen Formel (II), 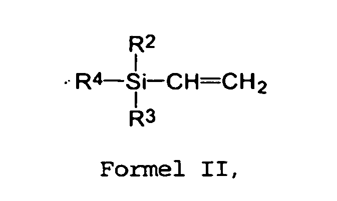 worin
R², R³, R⁴ gleiche oder verschiedene Alkyl-, Alkoxy-, Aryl-, Aryloxy- oder Alkenyl-Reste mit 1 bis 20 Kohlenstoffatomen, vorzugsweise Methoxy- oder Ethoxygruppen sind, mit der Maßgabe, dass mindestens ein Rest eine Alkoxygruppe ist und
C) Vinylcyclohexenoxid,
mit der Maßgabe, dass das Molverhältnis n(Vinylalkoxysilan)/n(Vinylcyclohexenoxid) > 1 ist.

5. Verfahren gemäß Anspruch 4, **dadurch gekennzeichnet, dass** R² = R³ = R⁴ = OCH₃ ist.

6. Verfahren gemäß Anspruch 4, **dadurch gekennzeichnet, dass** R² = R³ = R⁴ = OC₂H₅ ist.

## Claims

1. Cationic radiation-curing controlled release formulation for producing silicone release coatings, composed of:
a) 1% to 60% by mass of at least one silicone resin modified with vinylalkoxysilane and vinylcyclohexene oxide,
b) 35% to 98.5% by mass of at least one epoxy-functionalized polysiloxane, and
c) 0.5% to 5% by mass of at least one cationic photoinitiator.

2. Cationic radiation-curing controlled release formulation according to Claim 1, **characterized in that** use is made as component b) of epoxy-functionalized polysiloxanes of the general formula (IV) 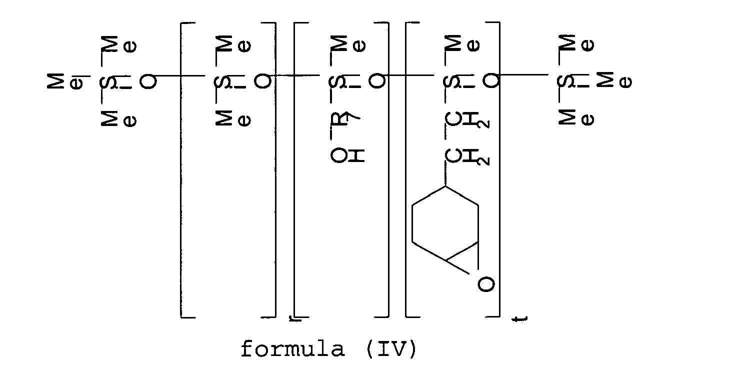 in which
R⁷ are identical or different alkenyl groups having 2 to 20 carbon atoms, and may contain ether, ester, urethane or amide groups,
r is 5 to 300,
s is 0.1 to 100, and
t is 1 to 100.

3. Cationic radiation-curing controlled release formulation according to Claim 1 and/or 2, comprising
d) at least one coinitiator.

4. Process for preparing compounds according to Claim 1, component a), by reacting, in accordance with conditions that are known per se,
A) SiH-functional silicone resins of the general formula (I),
MₐM'_{b}D_{c}D'_{d}TₑQ_{f} (I)
in which
M = (R¹)₃SiO_{1/2},
M' = (R¹)₂HSiO_{1/2},
D = (R¹)₂SiO_{2/2},
D' = (R¹)HSiO_{2/2,}
T = (R¹)SiO_{3/2},
Q = SiO_{4/2},
R¹ are identical or different radicals from the following group: alkyl, aryl, or alkaryl having 1 to 30 C atoms,
a = 4 to 200,
b = 0 to 20,
c = 0 to 100,
d = 0 to 20,
e = 0 to 150, and
f = 1 to 200,
with the proviso that the sum of b + d is ≥ 1, with
B) vinylalkoxysilanes of the general formula (II), 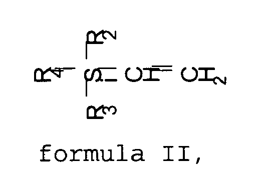 in which
R², R³, and R⁴ are identical or different alkyl, alkoxy, aryl, aryloxy or alkenyl radicals having 1 to 20 carbon atoms, preferably methoxy or ethoxy groups, with the proviso that at least one radical is an alkoxy group, and
C) vinylcyclohexene oxide,
with the proviso that the molar ratio n(vinylalkoxysilane)/n(vinylcyclohexene oxide) is > 1.

5. Process according to Claim 4, **characterized in that** R² = R³ = R⁴ = OCR₃.

6. Process according to Claim 4, **characterized in that** R² = R³ = R⁴ = OC₂H₅.

## Revendications

1. Composition à détachement réglé, durcissable par irradiation avec un amorceur cationique, pour la production de revêtements de séparation, constituée de :
a) 1 à 60 % en masse d'au moins une résine silicone modifiée avec un vinylalcoxysilane et un oxyde de vinylcyclohexène,
b) 35 à 98,5 % en masse d'au moins un polysiloxane à fonctionnalisation époxy et
c) 0,5 à 5 % en masse d'au moins un photo-amorceur cationique.

2. Composition à détachement réglé, durcissable par irradiation avec un amorceur cationique selon la revendication 1, **caractérisée en ce qu'**on utilise comme composant b) des polysiloxanes à fonctionnalisation époxy, de formule générale (IV) 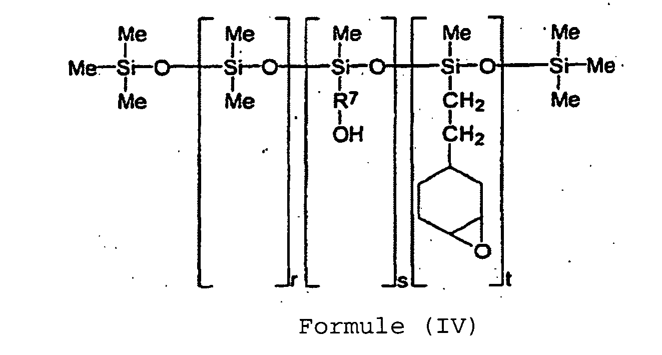 dans laquelle
R⁷ représente des groupes alcényle identiques ou différents ayant de 2 à 20 atomes de carbone, qui peuvent contenir des groupes éther, ester, uréthanne ou amido,
r va de 5 à 300,
s va de 0,1 à 100,
t va de 1 à 100.

3. Composition à détachement réglé, durcissable par irradiation avec un amorceur cationique, selon la revendication 1 et/ou la revendication 2, contenant
d) au moins un co-amorceur.

4. Procédé pour la préparation de composés selon la revendication 1, composant a), par mise en réaction, selon des conditions connues en soi, de
A) des résines silicone à fonction SiH, de formule générale (I),
MₐM'_{b}D_{c}D'_{d}T'ₑQ_{f} (I)
dans laquelle
M = (R¹)₃SiO_{1/2},
M' = (R¹)₂HSiO_{1/2},
D = (R¹)₂SiO_{2/2},
D' = (R¹)HSiO_{2/2},
T = (R¹)SiO_{3/2},
Q = SiO_{4/2},
R¹ = représentent des radicaux identiques ou différents choisi parmi des groupes alkyle, aryle ou alkaryle ayant de 1 à 30 atomes de carbone,
a = 4 à 200,
b = 0 à 20,
c = 0 à 100,
d = 0 à 20,
e = 0 à 150,
f = 1 à 200,
étant entendu que la somme de b + d est ≥ 1,
avec
B) des vinylalcoxysilanes de formule générale (II), 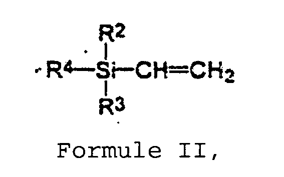 dans laquelle
R², R³, R⁴ représentent des radicaux alkyle, alcoxy, aryle, aryloxy ou alcényle, identiques ou différents, ayant de 1 à 20 atomes de carbone, de préférence le groupe méthoxy ou éthoxy, étant entendu qu'au moins un radical est un groupe alcoxy, et
C) de l'oxyde de vinylcyclohexène,
étant entendu que le rapport molaire
n(vinylalcoxysilane)/n(oxyde de vinylcyclohexène) est > 1.

5. Procédé selon la revendication 4, **caractérisé en ce que** R² = R³ = R⁴ = OCH₃.

6. Procédé selon la revendication 4, **caractérisé en ce que** R² = R³ = R⁴ = OC₂R₅.
